(19) Europäisches Patentamt
European Patent Office
Office européen des brevets

(11) **EP 4 718 333 A1**

(12) **EUROPEAN PATENT APPLICATION**

(43) Date of publication:
01.04.2026 Bulletin 2026/14

(21) Application number: 25203055.6

(22) Date of filing: 18.09.2025

(51) International Patent Classification (IPC):
*G06N 3/092* (2023.01)     *G06N 3/0985* (2023.01)
*G06N 7/01* (2023.01)

(52) Cooperative Patent Classification (CPC):
G06N 3/0985; G06N 3/092; G06N 7/01

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 27.09.2024 CN 202411360189
02.04.2025 KR 20250043042

(71) Applicant: Samsung Electronics Co., Ltd.
Suwon-si, Gyeonggi-do 16677 (KR)

(72) Inventors:
• ZHANG, ShaLu
Xi'an, 710000 (CN)
• CHEN, Lin
Xi'an, 710000 (CN)
• KONG, Lin
Xi'an, 710000 (CN)
• MA, Jingkun
Xi'an, 710000 (CN)

(74) Representative: Arnold & Siedsma
Bezuidenhoutseweg 57
2594 AC The Hague (NL)

(54) **METHOD AND APPARATUS WITH HYPERPARAMETER CONFIGURATION**

(57) A processor-implemented method including setting first search ranges of hyperparameters of a set of hyperparameters, performing a first training process using parameter value sets of the hyperparameters selected from the first search ranges to generate artificial intelligence (AI) models, generating evaluation scores of the AI models with respect to an evaluation indicator, determining a contribution of the hyperparameters to the evaluation scores, setting second search ranges of the hyperparameters based on the contribution of the hyperparameters, and performing a second training process based on the second search ranges.

```
                    ┌─────────┐
                    │  Start  │
                    └─────────┘
                         │
    ┌────────────────────────────────────────────────────────┐
    │ Set first search ranges of hyperparameters of a set of  │─── 110
    │                   hyperparameters                        │
    └────────────────────────────────────────────────────────┘
                         │
    ┌────────────────────────────────────────────────────────┐
    │ Generate AI models by performing first training process │─── 120
    │ using parameter value sets of hyperparameters selected   │
    │               from first search ranges                   │
    └────────────────────────────────────────────────────────┘
                         │
    ┌────────────────────────────────────────────────────────┐
    │ Determine evaluation scores of AI models with respect   │─── 130
    │              to evaluation indicator                     │
    └────────────────────────────────────────────────────────┘
                         │
    ┌────────────────────────────────────────────────────────┐
    │ Determine contribution of hyperparameters to evaluation │─── 140
    │                     scores                               │
    └────────────────────────────────────────────────────────┘
                         │
    ┌────────────────────────────────────────────────────────┐
    │ Set second search ranges of hyperparameters based on    │─── 150
    │              contribution of hyperparameters             │
    └────────────────────────────────────────────────────────┘
                         │
    ┌────────────────────────────────────────────────────────┐
    │ Perform second training process based on second search  │─── 160
    │                      ranges                              │
    └────────────────────────────────────────────────────────┘
                         │
                    ┌─────────┐
                    │   End   │
                    └─────────┘
                                              100
```

FIG. 1

EP 4 718 333 A1

**Description**

BACKGROUND

1. Field

The following embodiments relate to a method and apparatus with hyperparameter configuration.

2. Description of Related Art

In order to simplify a problem and ensure the stability and repeatability of a training process, hyperparameters may be configured prior to training a model, typically without calculating or updating hyperparameters during the training of the model. Since machine learning algorithms are very sensitive to hyperparameters, adjusting the hyperparameters may greatly affect the performance of machine learning algorithms. Appropriate configuration of hyperparameters may significantly improve the performance of machine learning models, so hyperparameter optimization tasks may be as important as model development. Hyperparameter optimization schemes may include grid search, random search, and top-K selection. Additionally, hyperparameters may be configured based on expert analysis.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Aspects of the present disclosure are defined in the appended independent claims. Some preferred embodiments are defined in the appended dependent claims.

In a general aspect, here is provided a processor-implemented method including setting first search ranges of hyperparameters of a set of hyperparameters, performing a first training process using parameter value sets of the hyperparameters selected from the first search ranges to generate artificial intelligence (AI) models, generating evaluation scores of the AI models with respect to an evaluation indicator, determining a contribution of the hyperparameters to the evaluation scores, setting second search ranges of the hyperparameters based on the contribution of the hyperparameters, and performing a second training process based on the second search ranges.

The second search ranges may be narrower than each corresponding first search range of the first search ranges.

The method may include removing one or more of the hyperparameters based on the contribution of the hyperparameters to determine a new set of hyperparameters.

The performing of the second training process may include performing the second training process based on the new set of hyperparameters and the second search ranges.

The setting of the second search ranges may include setting the second search ranges based on a proportion in which contribution values of the hyperparameters exceed a threshold in each sub-interval of the first search ranges.

The contribution may include Shapley values of the hyperparameters.

The setting of the second search ranges may include setting the second search ranges based on a proportion of positive values among the Shapley values of the hyperparameters in each sub-interval of the first search ranges.

The setting of the second search ranges may include dividing each of the first search ranges into sub-intervals, generating a proportion of positive values among the Shapley values with respect to each sub-interval of the sub-intervals, selecting one or more candidate intervals from the sub-intervals based on the proportion, and setting the second search ranges based on the one or more candidate intervals.

The method may include generating average Shapley values of the hyperparameters based on the Shapley values and removing one or more hyperparameters having a relatively low average Shapley value from among the hyperparameters based on the average Shapley values to determine a new set of hyperparameters.

The hyperparameters may include one or more of a learning rate (LR), batch size (BS), iteration number (e.g., epoch), decay rate, regularization parameter, and optimizer parameter (e.g., beta1, beta2) of adaptive momentum estimation (ADAM).

The evaluation indicator may include one or more of an accuracy, precision, recall, F1 score, confusion matrix, and loss value.

The method may include selecting the parameter value sets of the hyperparameters from the first search ranges based on a hyperparameter optimization algorithm and the hyperparameter optimization algorithm may include one or more of a sequential model-based algorithm configuration (SMAC), grid search (GS), random search (RS), Bayesian optimization, top-K selection, and reinforcement learning.

The AI models include machine learning models, preferably including one of classification models, predictive models, and regression models. For example, the AI models may be configured to perform a classification task. In an even further example, accuracy is used as the evaluation indicator.

In a general aspect, here is provided a non-transitory computer-readable storage medium storing instructions that, when executed by a processor, cause the processor to perform the method, such as the method according to any of the embodiments described above or described further below in the detailed description.

In a general aspect, here is provided an electronic device including: at least one processor; and a memory storing instructions that, when executed by the at least one processor, cause the electronic device to: set first search ranges of hyperparameters of a set of hyperparameters; perform a first training process using parameter value sets of the hyperparameters selected from the first search ranges to generate artificial intelligence (AI) models; generate evaluation scores of the AI models with respect to an evaluation indicator; determine a contribution of the hyperparameters to the evaluation scores; set second search ranges of the hyperparameters based on the contribution of the hyperparameters; and perform a second training process based on the second search ranges.

The second search ranges may be narrower than each corresponding first search range of the first search ranges.

The instructions, when executed by the at least one processor, may cause the electronic device to remove one or more of the hyperparameters based on the contribution of the hyperparameters to determine a new set of hyperparameters.

The instructions, when executed by the at least one processor, may cause the electronic device to set the second search ranges based on a proportion in which contribution values of the hyperparameters exceed a threshold in each sub-interval of the first search ranges.

The contribution may include Shapley values of the hyperparameters.

The instructions, when executed by the at least one processor, may cause the electronic device to set the second search ranges based on a proportion of positive values among the Shapley values of the hyperparameters in each sub-interval of the first search ranges.

The instructions, when executed by the at least one processor, may cause the electronic device to divide each of the first search ranges into sub-intervals, generate a proportion of positive values among the Shapley values with respect to each sub-interval of the sub-intervals, select one or more candidate intervals from the sub-intervals based on the proportion, and set the second search ranges based on the one or more candidate intervals.

In the above-described aspects, as an example, the AI models may include machine learning models, such as classification models (e.g., for images and/or objects), predictive models, or regression models. For example, the AI models may be configured to perform a classification task. In an even further example, accuracy is used as the evaluation indicator for training AI models to perform classification tasks.

Other features and aspects will be apparent from the following detailed description, the drawings, and the claims.

BRIEF DESCRIPTION OF THE DRAWINGS

FIG. 1 illustrates an example method with hyperparameter configuration according to one or more embodiments.
FIG. 2 illustrates example training processes using contributions of hyperparameters according to one or more embodiments.
FIG. 3 illustrates example importance rankings based on contributions of hyperparameters according to one or more embodiments.
FIG. 4 illustrates an example method with setting a second search range according to one or more embodiments.
FIGS. 5 to 10 illustrate example graphs showing Shapley values of various hyperparameters according to one or more embodiments.
FIG. 11 illustrates an example electronic device according to one or more embodiments.

Throughout the drawings and the detailed description, unless otherwise described or provided, the same or like drawing reference numerals may be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example", "embodiment", and "example embodiment" herein have a same meaning (e.g., the phrasing 'in an or one example' has a same meaning as 'in an or one embodiment" and 'in an or one example embodiment'), and "one or more examples" has a same meaning as "one or more embodiments" and "one or more example embodiments". Still further, each of multiple or all separately described an/one "example", "embodiment", "example embodiment", as well as "examples", "embodiments", "example embodiments", herein may be included, in combination, in a same embodiment in any combination.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

Unless otherwise defined, all terms, including technical and scientific terms, used herein have the same meaning as commonly understood by one of ordinary skill in the art to which this disclosure pertains and specifically in the context on an understanding of the disclosure of the present application. Terms, such as those defined in commonly used dictionaries, are to be interpreted as having a meaning that is consistent with their meaning in the context of the relevant art and specifically in the context of the disclosure of the present application, and are not to be interpreted in an idealized or overly formal sense unless expressly so defined herein.

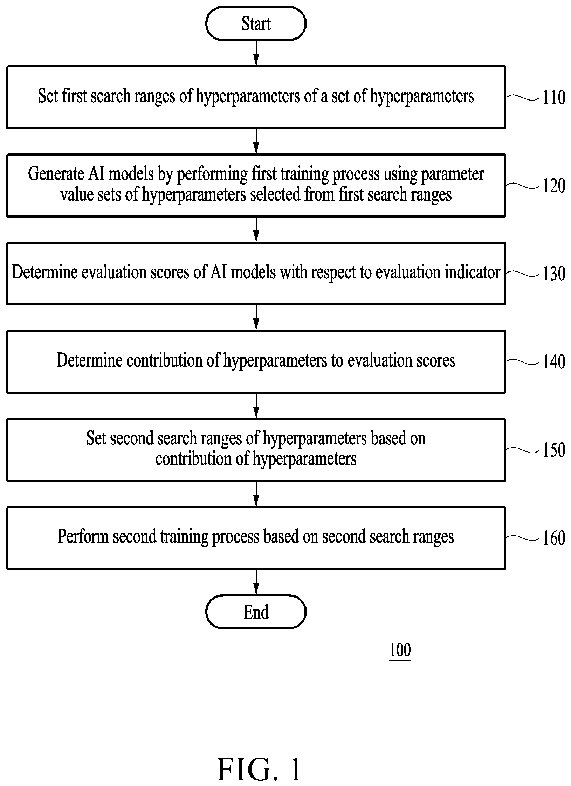

FIG. 1 illustrates an example method with hyperparameter configuration according to one or more embodiments. In an example, a search space for hyperparameter configuration (e.g., hyperparameter optimization) may be effectively reduced. In an example, the efficiency of hyperparameter configuration may be improved. In an example, hyperparameters may be efficiently searched, and higher-performance hyperparameter configurations may be achieved even under limited time and/or limited computing resources. The hyperparameter configuration method according to an example may be used together with existing hyperparameter configuration schemes, and multiple improvements in efficiency for the hyperparameter configuration may be achieved.

In an example, hyperparameter configuration may be performed based on a contribution of the hyperparameters to a training result (e.g., model evaluation score). For example, the contribution may include a Shapley value. Hyperparameters may be configured efficiently by reducing a search space and/or the number of hyperparameters by using the contribution.

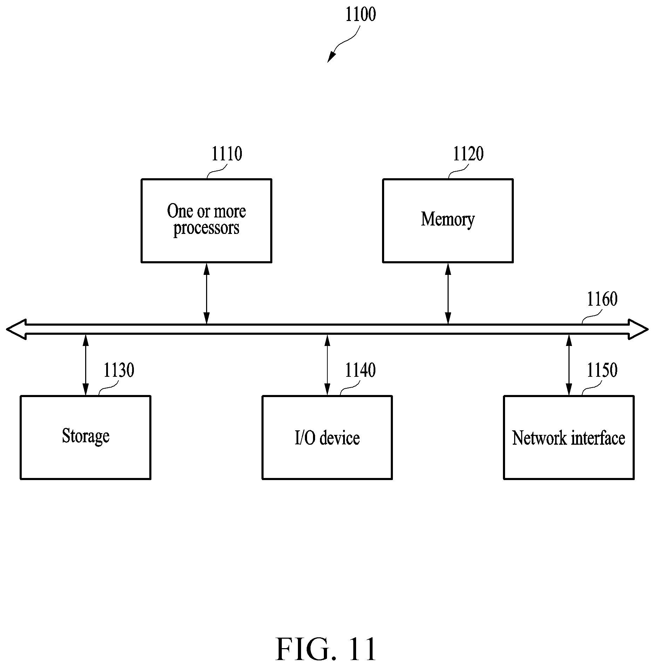

Referring to FIG. 1, in a non-limiting example, method 100 may include operation 110. For example, in operation 110, an electronic device (e.g., electronic device 1100 of FIG. 11) may set first search ranges for hyperparameters of a set of hyperparameters. The set of hyperparameters may include hyperparameters. The search range may be a space or interval from which a parameter value of a hyperparameter may be selected. Hyperparameter configuration (e.g., hyperparameter optimization) may be performed over multiple trials. In each trial, a parameter value may be selected within a search range of a hyperparameter. For example, the first search range may be an initial search range.

For example, the hyperparameters may include one or more of a learning rate (LR), batch size (BS), iteration number (e.g., epoch), decay rate, regularization parameter, and optimizer parameter (e.g., beta1, beta2) of adaptive momentum estimation (ADAM). For example, the first search range of a learning rate may be determined between 0 and 1. A specific search range may vary depending on a problem type, algorithm, and/or dataset. A small learning rate may slow down the convergence speed, but may help increase training stability and avoid missing an optimal solution. A large learning rate may increase the convergence speed, but may also make training unstable or cause cases where convergence fails. The first search range may be determined as a relatively wide range between 0 and 1. For example, a range of 0.001 to 1 may be selected.

A set of hyperparameters of hyperparameters may be determined for a predetermined artificial intelligence (AI) model, and a first search range for each hyperparameter may be determined. For example, the AI model may include, but is not limited to, various machine learning models, such as classification models, predictive models, and regression models.

In an example, the first search range of the hyperparameters may be set manually. For example, a default range may be provided, and a first search range of a particular hyperparameter may be set to the default range. In an example, a particular search range used in a previous parameter configuration process may be used as the first search range. In an example, parameter configuration (e.g., parameter optimization) may be performed as the training process progresses, narrowing the search range. A next search range (e.g., a second search range) of a next training process (e.g., a second training process) may be narrower than a current search range (e.g., the first search range) of a current training process (e.g., a first training process).

Hyperparameter configuration (e.g., hyperparameter optimization) may consider characteristics of the AI model, requirements of the AI model, data characteristics, constraints on computational resources, and efficiency of a search algorithm. An ordinary user without specialized knowledge of the hyperparameters of a particular AI model may set a large number of hyperparameters and a wide search range, and then use existing hyperparameter optimization algorithms (e.g., sequential model-based algorithm configuration (SMAC), grid search (GS), random search (RS), Bayesian optimization, top-K selection, reinforcement learning, and the like) to perform hyperparameter configuration for a preset time.

In an example, in operation 120, the electronic device (e.g., electronic device 1100 of FIG. 11) may generate AI models by performing a first training process using parameter value sets of the hyperparameters selected from the first search ranges. The electronic device may select a parameter value of each hyperparameter from the first search range of each hyperparameter. When parameter values are selected from all the hyperparameters, the parameter values may form a parameter value set. An AI model may be trained based on the parameter value set to generate an AI model. Various AI models may be generated from different parameter value sets. A parameter value of each hyperparameter may be selected based on a hyperparameter optimization algorithm (e.g., SMAC, GS, RS, Bayesian optimization, top-K selection, reinforcement learning, and the like).

In an example, in operation 130, the electronic device (e.g., electronic device 1100 of FIG. 11) may determine evaluation scores of the AI models with respect to an evaluation indicator. The evaluation indicator may be various indicators used to evaluate the training results of an AI model. For example, the evaluation indicator may include, but is not limited to, accuracy, precision, recall, F1 score, confusion matrix, and loss value. The F1 score may be a harmonic mean of precision and recall. The confusion matrix may contain data on the number of correctly classified and incorrectly classified samples obtained by comparing a label with a predicted outcome of a model. The loss value may include, but is not limited to, a mean squared error (MSE), root mean squared error (RMSE), mean absolute error (MAE), coefficient of determination, and the like. An evaluation score for each AI model may be determined based on one or more evaluation indicators. The evaluation score may be an individual indicator value of an evaluation indicator. For example, an accuracy value of each AI model may be determined as an evaluation score based on an accuracy evaluation indicator.

For example, a residual network (e.g., ResNet 18) may be iteratively trained for 20 epochs using the Canadian institute for advanced research 10 (CIFAR 10) dataset for a classification task. SMAC may be used as a hyperparameter optimization algorithm. A hyperparameter, a type of neural network intelligence (NNI), and a search range may be selected as shown in Table 1 below. SMAC may be executed to configure the hyperparameters and obtain evaluation results.

Table 1:

| Hyperparameter | Type of NNI | Search range | Remarks |
|---|---|---|---|
| LR | Uniform distribution | [0.0001, 0.1] | Learning rate |
| BS | Random integer | [8, 512] | Training batch size |
| ADAM beta1 | Uniform distribution | [0.6, 0.999] | Beta1 of ADAM optimizer |
| ADAM beta2 | Uniform distribution | [0.6, 0.999] | Beta2 of ADAM optimizer |
| ADAM weight decay | Logarithmic uniform distribution | [0.001, 0.1] | Weight decay of ADAM optimizer |
| Adam epsilon | Random integer | [-12, -5] | Epsilon of ADAM optimizer |
| Adam amsgrad | Selection | ["true", "false"] | Amsgrad of ADAM optimizer |

In an example, NNI may be a framework for hyperparameter configuration. Uniform distribution, random integer, logarithmic uniform distribution, and selection may be sampling schemes used in NNI. Sampling may be performed from the search range depending on the sampling scheme. Beta1, beta2, weight decay, epsilon, amsgrad may be hyperparameters of an ADAM optimizer.

For example, by performing hyperparameter optimization for 3 hours using the SMAC algorithm, an evaluation result with an accuracy of 85.72% may be obtained. Here, an example using accuracy as an evaluation indicator is described, but the example is not limited thereto, and other evaluation indicators may be used. A combination of at least two of the evaluation indicators may be used as an evaluation indicator. For example, a weighted sum of at least two evaluation indicators may be used as a composite evaluation indicator. For example, a composite indicator AL may be generated based on an accuracy and loss value. This may be expressed as $AL = \lambda \cdot accuracy + (1-\lambda) \cdot loss$. Here, $\lambda$ denotes a weight of the accuracy, and $1-\lambda$ denotes a weight of the loss value. Depending on a scenario in which the AI model is used, one or more evaluation indicators may be selected. For example, a ResNet18 model may be used for classification. In general, classification accuracy may be important in classification tasks. In this case, accuracy may be selected as an evaluation indicator.

In an example, in operation 140, the electronic device (e.g., electronic device 1100 of FIG. 11) may determine a contribution of the hyperparameters to the evaluation scores. The contribution may be an extent to which each hyperparameter affects the evaluation score. The contribution may be numerically expressed as how much each hyperparameter positively or negatively affects the evaluation score. For example, when a particular hyperparameter affects a training process to increase an evaluation score, the contribution of that hyperparameter may have a relatively high value. When another hyperparameter affects the training process to lower an evaluation score, the contribution of that parameter may have a relatively low value.

In an example, the contribution may include Shapley values of the hyperparameters. The Shapley values may be based on game theory. A Shapley value method may be a solution that fairly distributes revenues and costs among multiple participants involved in a collaborative effort. The Shapley value method may be applied to situations where each participant's contribution is unequal, but each participant cooperates with others to obtain a compensation.

The Shapley value may reflect the contribution of each participant when working together. The Shapley value may be used to evaluate a task of hyperparameter tuning, for example, the contribution of a particular hyperparameter among synergistic effects of multiple hyperparameters. In an example, Shapley value theory may be applied to the field of hyperparameter optimization. By analyzing past hyperparameter configurations and a corresponding evaluation indicator using the Shapley value method, the contribution of each hyperparameter value to the evaluation indicator may be derived. Additionally, ranges that contribute more than other ranges in a current search range may be retrieved, and better search ranges for additional searches may be derived. An importance ranking of hyperparameters may be derived using Shapley value method analysis, and the search range may be optimized by excluding hyperparameters with low importance.

The Shapley value method may be used to solve a problem of profit distribution between each participant in a cooperative game. The Shapley value may be used to measure the contribution of each participant in collaboration to achieve an overall goal, and an average attention in the distribution process may be suppressed by using the Shapley value. The Shapley value may produce more rational and fair results than distribution schemes based on resource input value, distribution schemes based on resource allocation efficiency, or a combination of these distribution schemes.

In an example, the Shapley value may be determined based on Equation 1 below.

Equation 1:

$$\phi_i(v) = \frac{1}{|N|!}\sum_R \left[ v\left( P_i^R \cup \{i\} \right) - v\left( P_i^R \right) \right]$$

In Equation 1, $\phi_i(v)$ denotes a Shapley value of an ith participant, N denotes the number of participants, $P_i^R$ denotes a set of participants with a predetermined order R, $v(P_i^R)$ denotes a contribution of the set of participants with the predetermined order R, $v(P_i^R \cup \{i\})$ denotes a joint contribution after the ith participant joins the set of participants with the predetermined order R.

The following is an example of a calculation process of the Shapley value. Three engineers, L, M, and N may work together to complete a project. When evaluating individual contributions of L, M, and N to a project code, Table 2 below may show an efficiency of each engineer's individual code and combined code.

Table 2:

| V(x) | Number of rows of code |
|------|------------------------|
| L | 10 |
| M | 30 |
| N | 5 |
| L, M | 50 |
| L, N | 40 |
| M, N | 35 |
| L, M, N | 100 |

Since 3! = 6, there may be six possible schemes to list the three engineers in different orders. Table 3 below may show contribution values of each engineer in each scheme. For example, in a first row, the listing may be (L, M, N), and since L appears first, a contribution value of L may be V(L) = 10. Since M appears second, a contribution value of M may be V(M) = V(L, M) - V(L) = 50 - 10 = 40. Since N appears third, a contribution value of N may be V(N) = V(L, M, N) - V(L, M) = 100 - 50 = 50.

Table 3:

| Order | Contribution of L | Contribution of M | Contribution of N |
|-------|-------------------|-------------------|-------------------|
| L, M, N | V(L) = 10 | V(M, N) - V(N) = 40 | V(L, M, N) - V(L, M) = 50 |
| L, N, M | V(L) = 10 | V(L, M, N) - V(L, N) = 60 | V(L, N) - V(L) = 30 |
| M, L, N | V(L, M) - V(M) = 20 | V(M) = 30 | V(L, M, N) - V(L, M) = 50 |
| M, N, L | V(L, M, N) - V(M, N) = 65 | V(M) = 30 | V(M, N) - V(M) = 5 |
| N, L, M | V(L, N) - V(L) = 35 | V(L, M, N) - V(L, N) = 60 | V(N) = 5 |
| N, M, L | V(L, M, N) - V(M, N) = 65 | V(M, N) - V(N) = 30 | V(N) = 5 |

As shown in Table 4 below, an average value of each engineer's contribution value in different listing schemes may be calculated as a final contribution value of each engineer. The final contribution value of each engineer may correspond to a Shapley value.

Table 4:

| Participant | Calculation process | Shapley value |
|-------------|---------------------|---------------|
| L | $\dfrac{10 + 10 + 20 + 65 + 35 + 65}{6}$ | 34.17 |

(continued)

| Participant | Calculation process | Shapley value |
|---|---|---|
| M | $$\frac{40 + 60 + 30 + 30 + 60 + 30}{6}$$ | 41.7 |
| N | $$\frac{50 + 30 + 50 + 5 + 5 + 5}{6}$$ | 24.17 |

As may be seen from the calculation in Table 4, when M and N work individually, even when M's ability is six times that of N, M may receive 41.7% of the compensation based on project contribution, while N may receive 24.17% of the compensation, so the gap may be less than 2 times. This may indicate that the Shapley value may reflect the contribution of each participant in a collaborative situation.

In an example, in operation 140, the electronic device (e.g., electronic device 1100 of FIG. 11) may determine the contribution of the hyperparameters based on the Shapley values of the hyperparameters. To determine the Shapley value, Equation 1 described above or an existing Shapley value analysis tool (e.g., MATLAB, Python library, and the like) may be used. When Shapley values are applied to hyperparameter optimization, in Equation 1, N denotes the number of hyperparameters, $P_i^R$ denotes a set of hyperparameters with a predetermined order R, $v(P_i^R)$ denotes a contribution of the set of hyperparameters with the predetermined order R, $v(P_i^R \cup \{i\})$ denotes a joint contribution after an ith hyperparameter is added to the set of hyperparameters with the predetermined order R.

The contributions of the hyperparameters may be used to adjust the search range of the hyperparameters, and/or to remove one or more of the hyperparameters. For example, when adjusting a search range, the search range may be adjusted to a range that indicates high contribution. When removing a hyperparameter, one or more hyperparameters with low contribution among the set of hyperparameters may be removed. As a result, a new set of hyperparameters may be determined. Based on the adjusted search range and/or the new set of hyperparameters, the following training process may be performed.

In an example, a Shapley value method analysis may be performed based on hyperparameters and corresponding evaluation indicators to determine a Shapley value of each hyperparameter. For example, a first model may be determined based on the hyperparameters and corresponding evaluation indicators. The Shapley value method analysis may be performed on the first model to determine a Shapley value of each hyperparameter. Through this analysis, a contribution of an input (e.g., a hyperparameter) of the first model to an output (e.g., accuracy as an evaluation indicator) of the first model may be determined.

For example, a first model (e.g., a regression model) may be determined by performing training using hyperparameters and evaluation indicators (e.g., past data) on an evaluation dataset. For example, a particular algorithm (e.g., XGBRegressor) may be used for training. Then, by analyzing the first model using the Shapley value method, a Shapley value of each hyperparameter may be obtained in each sample of the evaluation results according to the first search range. To determine the Shapley value, Equation 1 described above or an existing Shapley value analysis tool (e.g., MATLAB, Python library, and the like) may be used. For example, the first model may be, but is not limited to, a linear regression model. By obtaining a regression model based on past data and performing Shapley value analysis on the regression model, calculations may be simplified and efficiency may be improved.

In an example, in operation 150, the electronic device (e.g., electronic device 1100 of FIG. 11) may set second search ranges of the hyperparameters based on a contribution of the hyperparameters. The second search ranges may be narrower than their corresponding first search ranges. For example, the second search range of a first hyperparameter among the hyperparameters may be narrower than the first search range of the first hyperparameter, and the second search range of a second hyperparameter among the hyperparameters may be narrower than the first search range of the second hyperparameter.

In an example, the operation 150 may include setting the second search ranges based on a proportion in which contribution values of the hyperparameters exceed a threshold in each sub-interval of the first search ranges. The first search range may be divided into sub-intervals, and the second search range may be determined such that one or more of the sub-intervals are included.

In the process of training AI models using hyperparameter value sets, a contribution value of each hyperparameter may be determined based on each hyperparameter value of each hyperparameter value set. For example, in the process of training a first AI model using a first hyperparameter value set, a contribution value corresponding to a first hyperparameter value of a first hyperparameter (e.g., LR) of the first hyperparameter value set may be determined, and in the process of training a second AI model using a second hyperparameter value set, a contribution value corresponding to a second hyperparameter value of a second hyperparameter (e.g., LR) of the second hyperparameter value set may be determined.

The second search ranges may be set based on a proportion in which the contribution values of the hyperparameters exceed the threshold in each sub-interval. For example, a proportion of contribution values exceeding the threshold among contribution values of a first sub-interval of the first search range of the first hyperparameter may be 90%, and a proportion of contribution values exceeding the threshold among contribution values of a second sub-interval may be 10%. For example, when a sub-interval in which a proportion of contribution values exceeding the threshold is 80% or more is selected as the second search range, the second search range may be configured to include the first sub-interval.

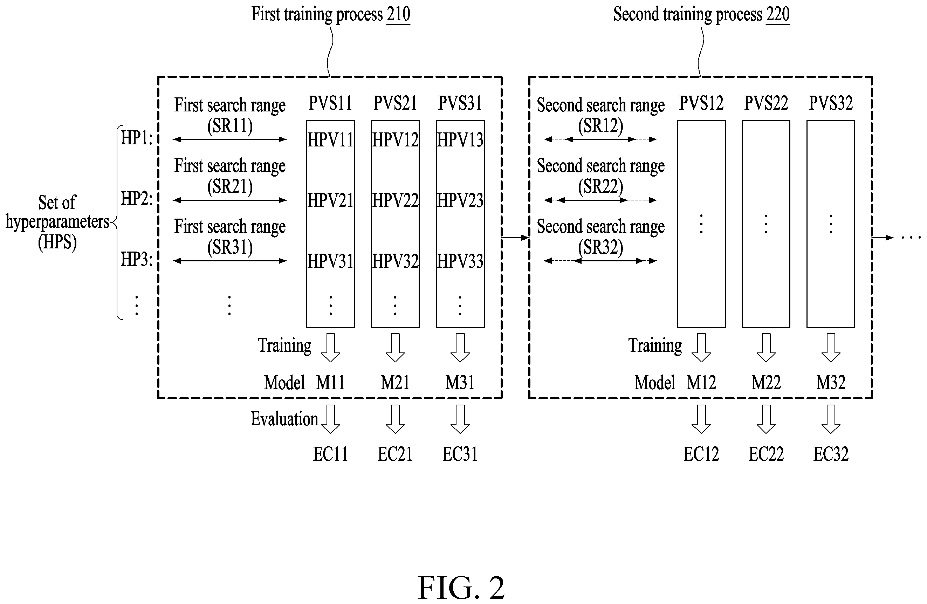

In an example, in operation 160, the electronic device (e.g., electronic device 1100 of FIG. 11) may perform a second training process based on the second search ranges. The electronic device may perform operation 220 of FIG. 2 based on the second search ranges. The electronic device may determine parameter value sets by selecting a parameter value of each hyperparameter from the second search ranges of the hyperparameters of the set of hyperparameters. The electronic device may perform the second training process by using each hyperparameter value set. The electronic device may determine evaluation scores of the AI models with respect to an evaluation indicator and determine a contribution of the hyperparameters to the evaluation scores.

The electronic device may set third search ranges of the hyperparameters based on the contribution of the hyperparameters. The electronic device may perform a third training process based on the third search ranges. The electronic device may iteratively adjust a search range and perform a training process using the adjusted search range.

FIG. 2 illustrates example training processes using contributions of hyperparameters according to one or more embodiments. Referring to FIG. 2, in a non-limiting example, a set of hyperparameters HPS may include hyperparameters (e.g., a first hyperparameter HP1, a second hyperparameter HP2, and a third hyperparameter HP3).

In an example, in a first training process 210, the first hyperparameter HP1 may have a first search range SR11. A hyperparameter value HPV11 of the first hyperparameter HP1 may be selected from the first search range SR11. In the first training process 210, the second hyperparameter HP2 may have a first search range SR21. A hyperparameter value HPV21 of the second hyperparameter HP2 may be selected from the first search range SR21. In the first training process 210, the third hyperparameter HP3 may have a first search range SR31. A hyperparameter value HPV31 of the third hyperparameter HP3 may be selected from the first search range SR31.

A parameter value set PVS11 may be formed based on the hyperparameter values HPV11, HPV21, and HPV31. A model M11 may be trained based on the parameter value set PVS11. An evaluation score EC11 of the model M11 may be determined based on an evaluation indicator.

Hyperparameter values HPV12, HPV22, HPV32, HPV13, HPV23, and HPV33 may be selected from the first search ranges SR11, SR21, and SR31, a parameter value set PVS21 may be formed based on the hyperparameter values HPV12, HPV22, and HPV32, and a parameter value set PVS31 may be formed based on the hyperparameter values HPV13, HPV23, and HPV33. A model M21 may be trained based on the parameter value set PVS21, and an evaluation score EC21 of the model M21 may be determined based on an evaluation index. A model M31 may be trained based on the parameter value set PVS31, and an evaluation score EC31 of the model M31 may be determined based on an evaluation index.

The hyperparameter value sets PVS11, PVS21, and PVS31 may be selected from the first search ranges SR11, SR21, and SR31 based on a hyperparameter optimization algorithm. For example, the hyperparameter optimization algorithm may include SMAC, grid search, random search, Bayesian optimization, top-K selection, reinforcement learning, and the like.

When the evaluation scores EC11, EC21, and EC21 are determined, contributions of the hyperparameters (e.g., the first hyperparameter HP1, the second hyperparameter HP2, and the third hyperparameter HP3) to the evaluation scores EC11, EC21, and EC21 may be determined. For example, a contribution of the first hyperparameter HP1 to the evaluation score EC1 may be determined based on the parameter value HPV11, a contribution of the second hyperparameter HP2 to the evaluation score EC1 may be determined based on the parameter value HPV21, and a contribution of the third hyperparameter HP3 to the evaluation score EC1 may be determined based on the parameter value HPV31.

Second search ranges (e.g., second search ranges SR12, SR22, and SR32) of the hyperparameters may be set based on contributions of the hyperparameters (e.g., the first hyperparameter HP1, the second hyperparameter HP2, and the third hyperparameter HP3). For example, in each sub-interval of the first search ranges SR11, SR21, and SR31, the second search ranges SR12, SR22, and SR32 may be set based on a proportion of contribution values of the hyperparameters HP1, HP2, and HP3 exceeding a threshold.

In an example, the contribution value may be a Shapley value. In this case, the second search ranges SR12, SR22, and SR32 may be set based on a proportion of positive values among Shapley values of the hyperparameters HP1, HP2, and HP3 in each sub-interval of the first search ranges SR11, SR21, and SR31. The first search ranges SR11, SR21, and SR31 may each be divided into sub-intervals. For each sub-interval of the sub-intervals, the proportion of the positive values among the Shapley values may be determined. One or more candidate intervals may be selected from the sub-intervals based on the determined proportion. The second search ranges SR12, SR22, and SR32 may be set based on the selected one or more candidate intervals.

In an example, in a second training process 220, the first, second and third hyperparameters HP1, HP2, and HP3 may have the second search ranges SR12, SR22, and SR32. Hyperparameter values of the first, second and third hyperparameters HP1, HP2, and HP3 may be selected from the second search ranges SR12, SR22, and SR32. Parameter value sets PVS12, PVS22, and PVS32 may be formed based on the hyperparameter values of the first, second and third hyperparameters HP1, HP2, and HP3. The hyperparameter value sets PVS12, PVS22, and PVS32 may be selected from the second search ranges SR12, SR22, and SR32 based on a hyperparameter optimization algorithm.

Models M12, M22, and M32 may be trained based on the parameter value sets PVS12, PVS22, and PVS32. Based on an evaluation indicator, evaluation scores EC12, EC22, and EC32 of the models M12, M22, and M32 may be determined. Contributions of the hyperparameters (e.g., the first hyperparameter HP1, the second hyperparameter HP2, and the third hyperparameter HP3) to the evaluation scores EC12, EC22, and EC32 may be determined, and a third search range of the hyperparameters may be set based on the contributions of the hyperparameters. The search ranges may be adjusted as many times as the required iteration number, and an efficient training process may be performed based on the adjusted search ranges.

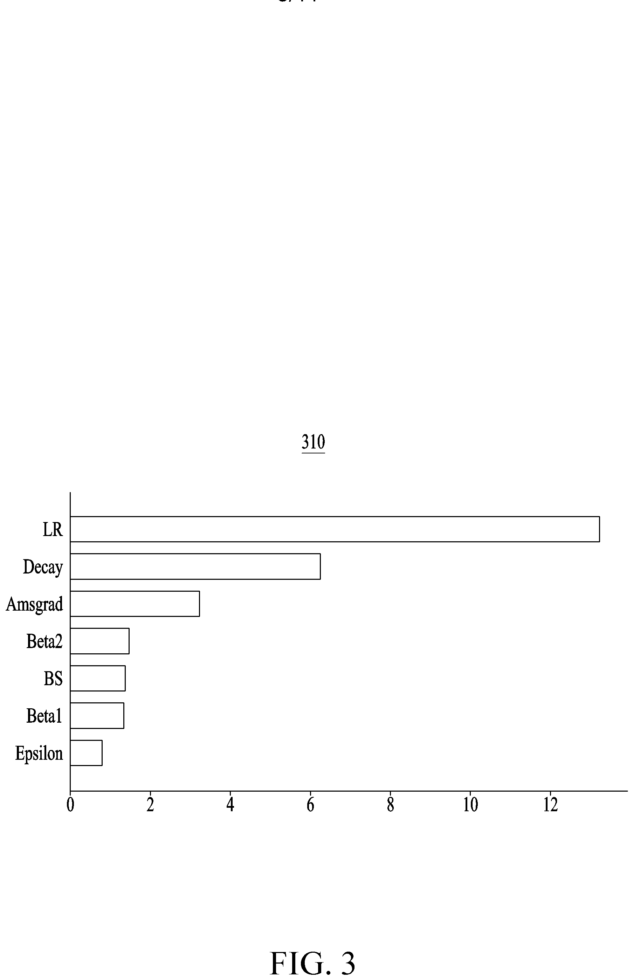

FIG. 3 illustrates example importance rankings based on contributions of hyperparameters according to one or more embodiments. Referring to FIG. 3, in a non-limiting example, hyperparameters (e.g., LR, Decay, Amsgrad, Beta2, BS, Beta1, Epsilon) may be sorted in order of importance. In an example, a new set of hyperparameters may be determined by removing one or more of the hyperparameters based on their contributions. In this case, a next training process (e.g., a second training process) may be performed based on the new set of hyperparameters and next search ranges (e.g., second search ranges). Thus, in the example illustrated by FIG. 3, Epsilon may be deleted.

An average contribution value may be used to remove hyperparameters from a set of hyperparameters. For example, parameter value sets of a first training process may include parameter values of a first parameter selected from a first search range of the first parameter, parameter values of a second parameter selected from the first search range of the second parameter, and parameter values of a third parameter selected from the first search range of the third parameter. Based on each parameter value, a contribution value of a corresponding parameter to an evaluation score of a corresponding model may be determined. The average contribution value may be determined by averaging the contribution values. For example, the average contribution value of the first parameter may be determined by averaging the corresponding contribution values of the parameter values of the first parameter.

In an example, a Shapley value may be used as the contribution value. Based on each parameter value, a Shapley value of a corresponding parameter for an evaluation score of a corresponding model may be determined. Based on the Shapley values, average Shapley values of the hyperparameters may be determined. For example, an average Shapley value of the first parameter may be determined by averaging corresponding Shapley values of the parameter values of the first parameter. A new set of hyperparameters may be determined by removing one or more hyperparameters having a relatively low average Shapley value among the hyperparameters based on the average Shapley values.

Table 5 below may show a search range obtained using a hyperparameter configuration of an embodiment.

Table 5:

| Hyperparameter | Initial search range (e.g., first search range) | Optimized search range (e.g., second search range) |
|---|---|---|
| LR | [0.0001, 0.1] | [0.0001, 0.00127] |
| BS | [8, 512] | [196, 512] |
| Adam beta1 | [0.6, 0.999] | [0.868, 0.9995] |
| Adam beta2 | [0.6, 0.999] | [0.7, 0.85] |
| Adam weight decay | [0.001, 0.1] | [0.0011, 0.018] |
| Adam epsilon | [-12, -5] | N/A(Removed) |
| Adam amsgrad | ["true", "false"] | ["true"] |

A lower bound of a hyperparameter of an optimized search range may be greater than a lower bound of a corresponding hyperparameter of the initial search range, and/or an upper bound of a hyperparameter of the optimized search range may be less than an upper bound of a corresponding hyperparameter of the initial search range.

In an example, when a new set of hyperparameters is determined by removing one or more of the hyperparameters, a next training process may be performed using an optimization search range (e.g., a next search range or a second search range) of the new set of hyperparameters.

For example, after the second search range is obtained in the first training process, the hyperparameter optimization algorithm may be used to iteratively optimize the hyperparameters. The hyperparameter optimization algorithm may be the same or different from the hyperparameter optimization algorithm used in the first training process. Additionally, in an example, a hyperparameter configuration algorithm (e.g., a hyperparameter optimization algorithm) may be used in parallel with an existing hyperparameter optimization algorithm. In an example, higher search efficiency may be achieved and less search resources may be consumed compared to when an existing hyperparameter optimization algorithm is used.

Examples of methods using Shapley value optimization may achieve higher optimal accuracy than typical methods used within the same execution time. This may indicate that optimizing a search range with Shapley values may achieve better optimization results within the same amount of time by utilizing optimization time more efficiently and increase optimization efficiency.

In the example illustrated by FIG. 3, Epsilon may be deleted based on the importance ranking of the hyperparameters. In this case, Table 6 below may show a search range obtained using an example hyperparameter configuration.

Table 6:

| Hyperparameter | Initial search range (e.g., first search range) | Optimized search range (e.g., second search range) |
|---|---|---|
| LR | [0.0001, 0.1] | [0.0001, 0.006] |
| Adam beta1 | [0.6, 0.999] | [0.6, 0.64] |
| Adam beta2 | [0.6, 0.999] | [0.7, 0.85] |
| Adam weight decay | [0.001, 0.1] | [0.001, 0.008] |
| Warm | [1, 15] | [4] |
| Adam epsilon | [-12, -5] | N/A(Removed) |
| Adam amsgrad | ["true", "false"] | ["true"] |

After a search range is optimized by using contribution values (e.g., Shapley values), a final accuracy of a model (e.g., VGG16) and an optimized hyperparameter may be obtained by performing hyperparameter optimization using the optimized search range. A method using contribution value optimization may show better performance (e.g., better evaluation indicator scores) than a method that does not use contribution value optimization, such as performing hyperparameter optimization for 3 hours using the initial search range. Using the contribution value optimization method in a given execution time and hardware environment, a model with higher accuracy may be derived.

Additionally, the contribution value optimization method may reach or come close to a known optimal accuracy in a shorter period of time, while a method using a fixed search range may require a longer period of time to reach a similar level of accuracy.

Additionally, the contribution value optimization method may reduce the search range while maintaining or improving model performance. For example, when top-K selection is used, some hyperparameter values may have an effect of decreasing rather than improving accuracy. Therefore, using a scheme of selecting the top-K data to optimize the search range of hyperparameters may introduce bias, which may significantly affect the optimized performance, especially when the corresponding hyperparameter has high importance. Under the same execution time, hardware and software environment, hyperparameter optimization search algorithm, dataset, and number of epoch iterations, optimizing the search range using contribution values may achieve better evaluation results (e.g., higher accuracy) than top-K selection.

In addition, although examples have been described with respect to predetermined models (e.g., ResNet18 and VGG16) and a predetermined evaluation indicator (e.g., accuracy), additional examples may also exhibit excellent optimization effects for other models and other evaluation indicators. For example, when a regression model that characterizes three-dimensional coordinates of a molecule and a potential energy of the molecule is used as a training target model and known silicon nitride data is used as training data, a hyperparameter optimization method based on contribution values may exhibit a smaller mean squared error than an existing hyperparameter optimization algorithm at the same execution time.

When desired hyperparameters are not obtained at a particular stage, contribution value analysis and optimization range selection may be performed iteratively until a desired result is obtained, and a final result may be returned to a user.

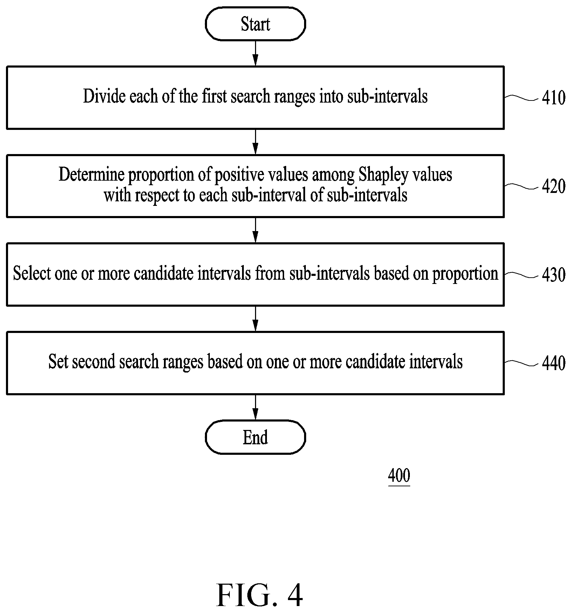

FIG. 4 illustrates an example method with setting a second search range according to one or more embodiments.

In an example, second search ranges may be set based on a relative magnitude of contribution values. For example, a second search range may be set to include some intervals that indicate high contribution values in a first search range. For example, the first search ranges may be each divided into sub-intervals, and the second search ranges may be set based on a proportion in which the contribution values of the hyperparameters exceed a threshold in each sub-interval of the first search ranges.

In an example, a contribution may include Shapley values of the hyperparameters. In this case, the second search ranges may be set based on a proportion of positive values among the Shapley values of the hyperparameters in each sub-interval of the first search ranges. For example, the first search range of LR may be 0 to 0.1. In the first search range, a proportion of Shapley values of each sub-interval may be determined. In a search range, the sub-intervals may be continuous, and the greater the proportion of positive Shapley values in a sub-interval, the more efficient training may be achieved by selecting LR in that sub-interval.

Referring to FIG. 4, in a non-limiting example, method 400 may include operation 410. In an example, in operation 410, the electronic device (e.g., electronic device 1100 of FIG. 11) may divide each of the first search ranges into sub-intervals. The first search ranges of the hyperparameters may be divided into the same number of sub-intervals or into different numbers of sub-intervals. For example, the first search range of LR from 0 to 0.1 may be divided into sub-intervals with intervals of 0.01. The proportion of Shapley values may be calculated in each sub-interval.

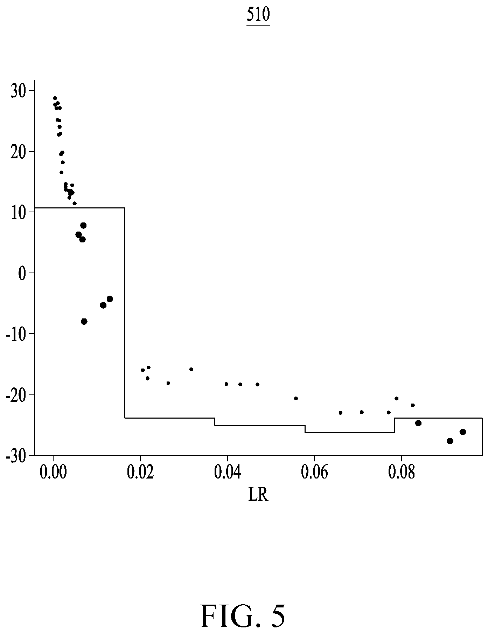

In an example, in operation 420, the electronic device (e.g., electronic device 1100 of FIG. 11) may determine a proportion of positive values among the Shapley values for each sub-interval of the sub-intervals. The Shapley value may be an example of a contribution value, and "0" to distinguish between negative and positive numbers may be an example of a threshold. For example, as illustrated below in FIG. 5, when Shapley values of all points in a first sub-interval from 0.00 to 0.01 in the first search range of LR are positive, the proportion of positive Shapley values in the first sub-interval may be 100%. When Shapley values of 4 out of 8 points in a second sub-interval from 0.01 to 0.02 are positive, the proportion of positive Shapley values in the second sub-interval may be 50%.

In an example, in operation 430, the electronic device (e.g., electronic device 1100 of FIG. 11) may select one or more candidate intervals from the sub-intervals based on the proportion. For example, a sub-interval with a proportion of positive values greater than a threshold may be selected. The threshold may be the same or different for each hyperparameter. For example, when sub-intervals are listed in order of increasing proportion of positive values, a predetermined number of sub-intervals may be selected.

For example, when the proportion of positive Shapley values in a predetermined sub-interval is greater than or equal to 80%, the predetermined sub-interval may be designated as a candidate interval. In this case, the first sub-interval of 0.00 to 0.01 in the previous example may be a candidate interval. In an example, when the proportion of positive Shapley values in two or more consecutive sub-intervals is greater than or equal to 80%, the two or more consecutive sub-intervals may be merged into one sub-interval.

As a threshold for proportion comparison decreases, the range of intervals from which to select may be expanded. As a threshold for proportion comparison increases, the range of intervals from which to select may become narrower. In an initial search range, for each hyperparameter, a current search range may be divided evenly into a plurality of sub-intervals, and the proportion of positive Shapley values of the points in each sub-interval may be calculated, and when the proportion is greater than a preset threshold, the sub-interval may correspond to an interval with high contribution and may be determined as a candidate interval.

In an example, in operation 440, the electronic device (e.g., electronic device 1100 of FIG. 11) may set the second search ranges based on the one or more candidate intervals. The electronic device may set the second search ranges to include the selected one or more candidate intervals. For example, the electronic device may merge consecutive candidate intervals into a single candidate interval. After searching all the sub-intervals, the electronic device may set the widest consecutive candidate intervals to be the next optimized search range.

The description related to LR may be similarly applied to Decay, Amsgrad, Beta2, BS, Beta1, or Epsilon.

FIGS. 5 to 10 illustrate example graphs showing Shapley values of various hyperparameters according to one or more embodiments. Referring to FIG. 5, in a non-limiting example, each point of a graph 510 may represent a Shapley value of a parameter value of a hyperparameter LR. Parameter values of the hyperparameter LR in FIG. 5 may be sampled from a first search range of 0.0001 to 0.1. The Shapley values of the parameter values may be in the range of -30 to 30.

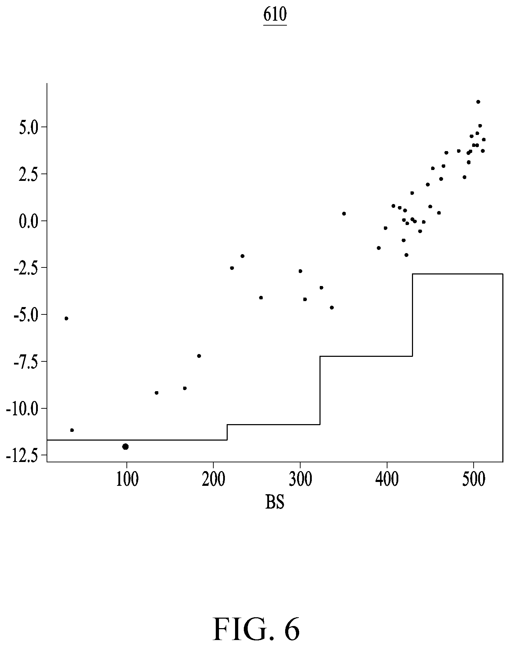

Referring to FIG. 6, in a non-limiting example, each point of a graph 610 may represent a Shapley value of a parameter value of a hyperparameter BS. Parameter values of the hyperparameter BS in FIG. 6 may be sampled from a first search range of 8 to 512. The Shapley values of the parameter values may be in the range of -12.5 to 7.5.

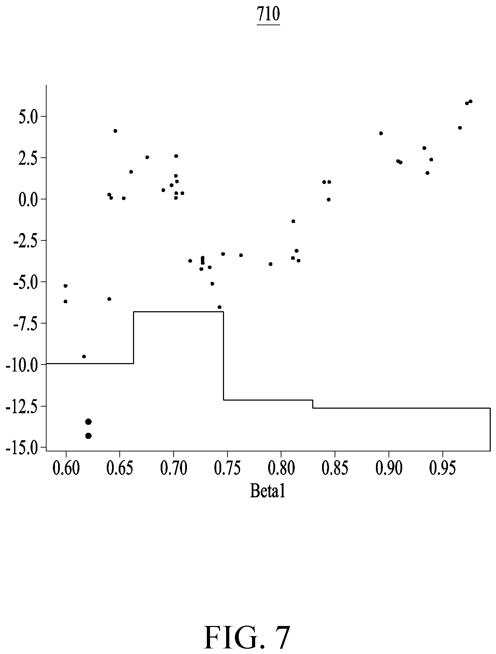

Referring to FIG. 7, in a non-limiting example, each point of a graph 710 may represent a Shapley value of a parameter value of a hyperparameter Beta1. Parameter values of the hyperparameter Beta1 in FIG. 7 may be sampled from a first search range of 0.6 to 0.999. The Shapley values of the parameter values may be in the range of -15 to 7.5.

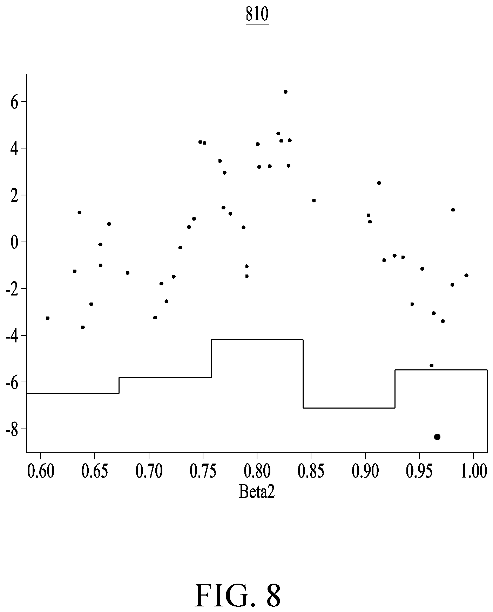

Referring to FIG. 8, in a non-limiting example, each point of a graph 810 may represent a Shapley value of a parameter value of a hyperparameter Beta2. Parameter values of the hyperparameter Beta2 in FIG. 8 may be sampled from a first search range of 0.6 to 0.999. The Shapley values of the parameter values may be in the range of -10 to 8.

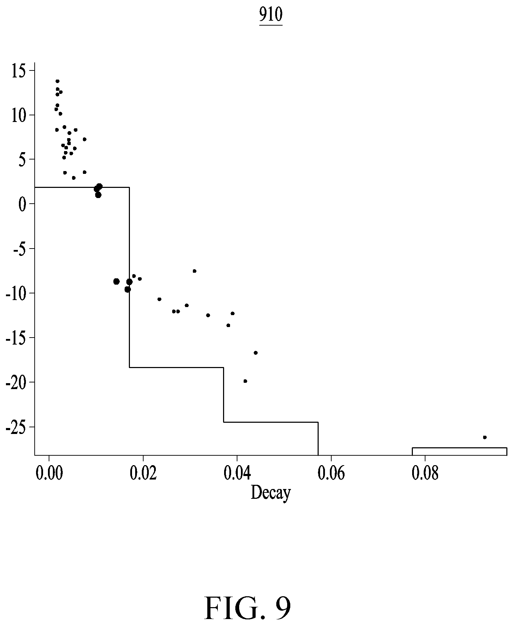

Referring to FIG. 9, in a non-limiting example, each point of a graph 910 may represent a Shapley value of a parameter value of a hyperparameter Decay. Parameter values of the hyperparameter Decay in FIG. 9 may be sampled from a first search range of 0.001 to 0.1. The Shapley values of the parameter values may be in the range of -30 to 15.

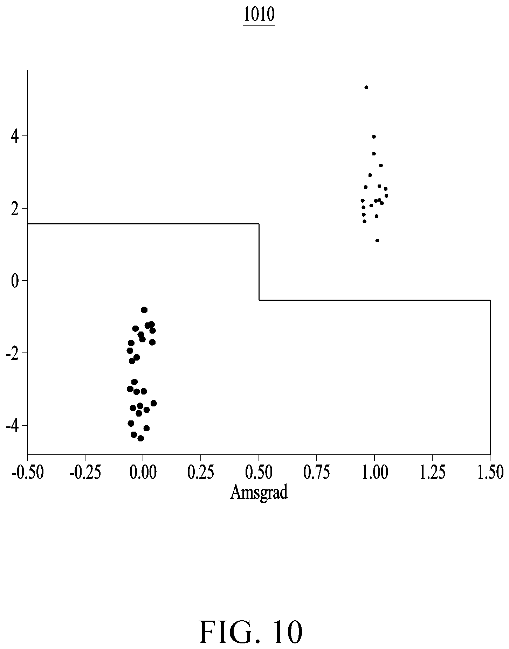

Referring to FIG. 10, in a non-limiting example, each point of a graph 1010 may represent a Shapley value of a parameter value of a hyperparameter Amsgrad. Parameter values of the hyperparameter Amsgrad in FIG. 10 may be sampled from a first search range 0.00 (false) and 1.00 (true). The Shapley values of the parameter values may be in the range of -6 to 6.

A first search range (e.g., the first search range of FIGS. 5 to 10) may be divided into consecutive sub-intervals. Second search ranges may be set based on a proportion of positive values among the Shapley values of the parameter values in each sub-interval of the first search ranges. For example, in the example illustrated in FIG. 5, when Shapley values of all points in a first sub-interval from 0.00 to 0.01 in the first search range of LR are positive, the proportion of positive Shapley values in the first sub-interval may be 100%. When Shapley values of 4 out of 8 points in a second sub-interval from 0.01 to 0.02 are positive, the proportion of positive Shapley values in the second sub-interval may be 50%.

One or more candidate intervals may be selected from the sub-intervals based on the determined proportion. For example, when the proportion of positive Shapley values in a predetermined sub-interval is greater than or equal to 80%, the predetermined sub-interval may be designated as a candidate interval. In this case, the first sub-interval of 0.00 to 0.01 in the previous example may be a candidate interval. In an example, consecutive candidate intervals may be merged into a single candidate interval. For example, when the proportion of positive Shapley values in two or more consecutive sub-intervals is greater than or equal to 80%, the two or more consecutive sub-intervals may be merged into one sub-interval. After searching all the sub-intervals and merging the consecutive candidate intervals, the widest consecutive candidate intervals may be set as the second search range.

FIG. 11 illustrates an example electronic device according to one or more embodiments. Referring to FIG. 11, in a non-limiting example, an electronic device 1100 may include one or more processors 1110, a memory 1120, a storage 1130, an input/output (I/O) device 1140, and a network interface 1150. These components may communicate with each other via a communication bus 1160. For example, the electronic device 1100 may be implemented as at least a part of a computing device, such as a desktop or a server.

The one or more processors 1110 may execute instructions stored in the memory 1120 or the storage 1130. When executed by the one or more processors 1110, the instructions may cause the electronic device 1100 to perform the operations described with reference to FIGS. 1 to 10. The memory 1120 may include a non-transitory computer-readable storage medium or a non-transitory computer-readable storage device. The memory 1120 may store instructions to be executed by the one or more processors 1110 and may store related information while software and/or an application is being executed by the electronic device 1100.

The storage 1130 may include a non-transitory computer-readable storage medium or a non-transitory computer-readable storage device. The storage 1130 may store a greater amount of information than the memory 1120 for a longer period of time. For example, the storage 1130 may include a magnetic hard disk, an optical disc, a flash memory, a floppy disk, or any other form of non-volatile memory known in the art.

The I/O device 1140 may receive an input from a user in traditional input manners through a keyboard and a mouse, and in new input manners, such as a touch input, a voice input, and an image input. For example, the I/O device 1140 may include a keyboard, a mouse, a touch screen, a microphone, or any other device that detects the input from the user and transmits the detected input to the electronic device 1100. The I/O device 1140 may provide an output of the electronic device 1100 to the user through a visual, auditory, or haptic channel. The I/O device 1140 may include, for example, a display, a touch screen, a speaker, a vibration generator, or any other device that provides the output to the user. The network interface 1150 may communicate with an external device through a wired or wireless network.

The electronic devices, processors, memories, neural networks, electronic device 1100, one or more processors 1111, memory 1120, storage 1130, I/O device 1140, and network interface 1150 described herein, including descriptions with respect to respect to FIGS. 1-11, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit (ALU), a digital signal processor (DSP), a microcomputer, a programmable logic controller, a field-programmable gate array (FPGA), a programmable logic array (PLU), a microprocessor, or any other device or combination of devices that is configured to respond to and execute instructions (e.g., code or coding) in a defined manner to achieve a desired result. In one example, a processor or computer includes, or is connected to, one or more memories storing the instructions or software that are executed by the processor or computer. Hardware components implemented by a processor or computer may execute the instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both, and thus while some references may be made to a singular processor or computer, such references also are intended to refer to multiple processors or computers. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing. Thus, references to a processor herein mean processing circuitry (e.g., circuitry that includes one or more processing element(s) circuits). One or more processors comprising processing circuitry also refers to each processor comprising processing circuitry, as well as some or all of the one or more processors comprising the same processing circuitry. In addition, processors(s) and controller(s), as a non-limiting example, do not mean human processing or human control, but rather, refer to hardware components as described herein, as non-limiting examples.

The methods illustrated in, and discussed with respect to, FIGS. 1-11 that perform the operations described in this application are performed by computing hardware, for example, by one or more processors or computers, implemented as described above implementing the instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations. References to a processor, or one or more processors, as a non-limiting example, configured to perform two or more operations refers to a processor or two or more processors being configured to collectively perform all of the two or more operations, as well as a configuration with the two or more processors respectively performing any corresponding one of the two or more operations (e.g., with a respective one or more processors being configured to perform each of the two or more operations, or any respective combination of one or more processors being configured to perform any respective combination of the two or more operations). Likewise, a reference to a processor-implemented method is a reference to a method that is performed by one or more processors or other processing or computing hardware of a device or system.

The instructions or software to control computing hardware, for example, one or more processors or computers, to implement the hardware components and perform the methods as described above may be written as computer programs, code segments, or other executable instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. Thus, references herein to storage media mean storage media hardware, and does not mean to transitory media, nor a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

**Claims**

1. A processor-implemented method, the method comprising:

   setting first search ranges of hyperparameters of a set of hyperparameters;
   performing a first training process using parameter value sets of the hyperparameters selected from the first search ranges to generate artificial intelligence, 'AI', models;
   generating evaluation scores of the AI models with respect to an evaluation indicator;
   determining a contribution of the hyperparameters to the evaluation scores;
   setting second search ranges of the hyperparameters based on the contribution of the hyperparameters; and
   performing a second training process based on the second search ranges.

2. The method of claim 1, wherein the second search ranges are narrower than each corresponding first search range of the first search ranges.

3. The method of claim 1 or 2, further comprising:
   removing one or more of the hyperparameters based on the contribution of the hyperparameters to determine a new set of hyperparameters.

4. The method of claim 3, wherein the performing of the second training process comprises:
   performing the second training process based on the new set of hyperparameters and the second search ranges.

5. The method of any of the previous claims, wherein the setting of the second search ranges comprises:
   setting the second search ranges based on a proportion in which contribution values of the hyperparameters exceed a threshold in each sub-interval of the first search ranges.

6. The method of claim any of the previous claims, wherein the contribution comprises Shapley values of the hyperparameters.

7. The method of claim 6, wherein the setting of the second search ranges comprises:
   setting the second search ranges based on a proportion of positive values among the Shapley values of the hyperparameters in each sub-interval of the first search ranges.

8. The method of claim 6 or 7, wherein the setting of the second search ranges comprises:

   dividing each of the first search ranges into sub-intervals;
   generating a proportion of positive values among the Shapley values with respect to each sub-interval of the sub-intervals;
   selecting one or more candidate intervals from the sub-intervals based on the proportion; and
   setting the second search ranges based on the one or more candidate intervals.

9. The method of any of the claims 6-8, further comprising:

   generating average Shapley values of the hyperparameters based on the Shapley values; and
   removing one or more hyperparameters having a relatively low average Shapley value from among the hyperparameters based on the average Shapley values to determine a new set of hyperparameters.

10. The method of claim any of the previous claims, wherein the hyperparameters comprise one or more of a learning rate, 'LR', batch size, 'BS', iteration number such as epoch, decay rate, regularization parameter, and an optimizer parameter, such as beta1, beta2, of adaptive momentum estimation, 'ADAM'.

11. The method of any of the previous claims, wherein the evaluation indicator comprises one or more of an accuracy, precision, recall, F1 score, confusion matrix, and loss value.

12. The method of any of the previous claims, further comprising:

   selecting the parameter value sets of the hyperparameters from the first search ranges based on a hyperparameter optimization algorithm,
   wherein the hyperparameter optimization algorithm comprises one or more of a sequential model-based algorithm configuration, 'SMAC', grid search, 'GS', random search, 'RS', Bayesian optimization, top-K selection, and reinforcement learning.

13. The method of any of the previous claims, wherein the AI models include machine learning models, preferably including one of classification models, predictive models, and regression models,

   wherein, preferably, the AI models are configured to perform a classification task, and
   wherein, more preferably, accuracy is used as the evaluation indicator.

14. A non-transitory computer-readable storage medium storing instructions that, when executed by a processor, cause the processor to perform the method of any of the previous claims.

15. An electronic device, comprising:

   at least one processor; and
   a memory storing instructions that, when executed by the at least one processor, cause the electronic device to perform the method according to any of the claims 1-13.

Start

| Set first search ranges of hyperparameters of a set of hyperparameters | ~ 110 |

| Generate AI models by performing first training process using parameter value sets of hyperparameters selected from first search ranges | ~ 120 |

| Determine evaluation scores of AI models with respect to evaluation indicator | ~ 130 |

| Determine contribution of hyperparameters to evaluation scores | ~ 140 |

| Set second search ranges of hyperparameters based on contribution of hyperparameters | ~ 150 |

| Perform second training process based on second search ranges | ~ 160 |

End

100

# FIG. 1

FIG. 2

310

FIG. 3

Start

Divide each of the first search ranges into sub-intervals — 410

Determine proportion of positive values among Shapley values
with respect to each sub-interval of sub-intervals — 420

Select one or more candidate intervals from sub-intervals based on proportion — 430

Set second search ranges based on one or more candidate intervals — 440

End

400

# FIG. 4

510

FIG. 5

610

FIG. 6

710

FIG. 7

810

FIG. 8

910

FIG. 9

FIG. 10

1100

1110

1120

One or more
processors

Memory

1160

1130

1140

1150

Storage

I/O device

Network interface

FIG. 11

Europäisches
Patentamt
European
Patent Office
Office européen
des brevets

# EUROPEAN SEARCH REPORT

**Application Number**

EP 25 20 3055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/273400 A1 (BOUÉ LAURENT [IL] ET AL) 15 August 2024 (2024-08-15) <br> * claim 1 * <br> * paragraph [0001] * <br> * paragraph [0012] * <br> * paragraph [0023] - paragraph [0024] * <br> * paragraph [0028] * <br> * paragraph [0030] * <br> * paragraph [0034] * <br> * paragraph [0041] * <br> * paragraph [0044] * <br> ----- | 1-15 | INV. <br> G06N3/092 <br> G06N3/0985 <br> G06N7/01 |
| A | DAPHNE THEODORAKOPOULOS ET AL: "Hyperparameter Importance Analysis for Multi-Objective AutoML", ARXIV.ORG, CORNELL UNIVERSITY LIBRARY, 201 OLIN LIBRARY CORNELL UNIVERSITY ITHACA, NY 14853, [Online] <br> 13 May 2024 (2024-05-13), XP091755184, <br> [retrieved on 2026-02-03] <br> * the whole document * <br> ----- | 1-15 | |
| A | VALERIO PERRONE ET AL: "Learning search spaces for Bayesian optimization: Another view of hyperparameter transfer learning", ARXIV.ORG, CORNELL UNIVERSITY LIBRARY, 201 OLIN LIBRARY CORNELL UNIVERSITY ITHACA, NY 14853, [Online] <br> 27 September 2019 (2019-09-27), XP081484117, <br> [retrieved on 2026-02-03] <br> * the whole document * <br> ----- | 1-15 | **TECHNICAL FIELDS SEARCHED (IPC)** <br><br> G06N |

The present search report has been drawn up for all claims

| Place of search | Date of completion of the search | Examiner |
|---|---|---|
| The Hague | 17 February 2026 | Tidriri, Khaoula |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 3055

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2026

| Patent document cited in search report | Publication date | Patent family member(s) | | Publication date |
|---|---|---|---|---|
| US 2024273400 A1 | 15-08-2024 | CN | 120344980 A | 18-07-2025 |
| | | EP | 4666221 A1 | 24-12-2025 |
| | | US | 2024273400 A1 | 15-08-2024 |
| | | WO | 2024173149 A1 | 22-08-2024 |

EPO FORM P0459

For more details about this annex : see Official Journal of the European Patent Office, No. 12/82